Europäisches Patentamt

European Patent Office

Office européen des brevets

(11) Publication number: **0 203 897**

**A1**

(12) **EUROPEAN PATENT APPLICATION**

(21) Application number: **86850132.1**

(22) Date of filing: **15.04.86**

(51) Int. Cl.⁴: **G01B 21/02** , G01D 5/34

(30) Priority: **26.04.85 SE 8502023**
**11.07.85 SE 8503436**

(43) Date of publication of application:
**03.12.86 Bulletin 86/49**

(84) Designated Contracting States:
**DE FR GB**

(71) Applicant: **SiTek Lab AB**
**Ögärdesvägen 13**
**S-433 25 Partille(SE)**

(72) Inventor: **Lindholm, Lars**
**Postlada 433**
**S-433 76 Partille(SE)**

(74) Representative: **Ferkinghoff, Claes-Göran et al**
**ALFONS HEDBERGS PATENTBYRA AB**
**Aschebergsgatan 35**
**S-411 33 Göteborg(SE)**

(54) **Position-determining apparatus.**

(57) An apparatus for determination of the true position of two reference objects which are movable relative to each other along a predetermined track. The objects consist of a signal emitting means (10, 30, 52, 112, 212) arranged to emit individually coded signals, and a detector (12, 54, 114) arranged to sense the geometric positions of these signals.

The spacing between the signals emitted from the signal emitting means (10, 30, 52, 112, 212) and the size of the detector (12, 54, 114) have been chosen to ensure that during the entire measuring operation at least one signal is at all times present within the sensing range of the detector.

EP 0 203 897 A1

*Fig.1*

## Position-Determining Apparatus

The subject invention concerns an apparatus for determining the positions of two reference objects which are movable relative to each other along a predetermined track.

Prior-art technology shows a number of examples of various measuring devices which are adapted to determine the relative positions of two reference objects. This is achieved by initially selecting a reference point (0 point) and subsequently determining the positions in relation to the reference point. Such relative position-determining operations may be effected e.g. by counting the number of equally spaced bars, whereby the distance from the reference point becomes a function of the number of bars. This method does not permit true positions to be determined, that is, the objects cannot be placed in any arbitrary relative positions without first resetting the measuring equipment to the reference point (0-point), which point becomes the starting point of all measurements with the aid of the equipment.

The purpose of the subject invention is to provide a position-determining apparatus by means of which it becomes possible to obtain true position determination. This means that a reference point or 0-point no longer need to be used. The apparatus in accordance with the invention is capable of operating at a very high speed for rapid position-determining operations. The readings of the position-determining operations are very accurate since the apparatus in accordance with the invention has no tendency of adding measurement deviations in the manner inherent in devices determining relative positions. In addition, the true position determination made possible in accordance with the invention may be made use of to compensate for thermal elongation and other variations of the components incorporated in the device.

This is achieved in accordance with the teachings of the subject invention in an apparatus of the kind referred to initially and wherein one of the reference objects is provided with at least one signal emitting means and the other reference object with a detector designed to detect signals emitted by the signal emitting means. The apparatus in accordance with the invention is characterized therein that the detector is arranged to sense the geometrical positions of signals emitted from the signal means and in that the signal emitting means is arranged to emit more than one signal and to code said signals to allow identification of the individual signals and in that the position-determining apparatus is devised in such a manner that throughout the entire position-determining operation at least one signal is present on the sensing surface of the detector.

The invention will be described in the following with reference to the accompanying drawings, wherein

Fig. 1 is a perspective view of an apparatus in accordance with the invention.

Fig. 2 is a plan view of the apparatus of Fig. 1.

Figs. 3 and 4 are respectively a perspective and a plan view of the apparatus in accordance with a second embodiment of the invention.

Figs. 5a and 5b are views illustrating the functional principle of operation of the apparatus in accordance with a third embodiment of the invention.

Fig. 6 is a perspective view of the apparatus in accordance with the invention devised to determine angular positions.

Fig. 7 is a view illustrating the functional principle of operation of a detector incorporated in the apparatus of Fig. 6.

Fig. 8 is a perspective view of the apparatus in accordance with a fifth embodiment, and

Fig. 9 is a partial view of a detail component incorporated in the apparatus for determining angular positions.

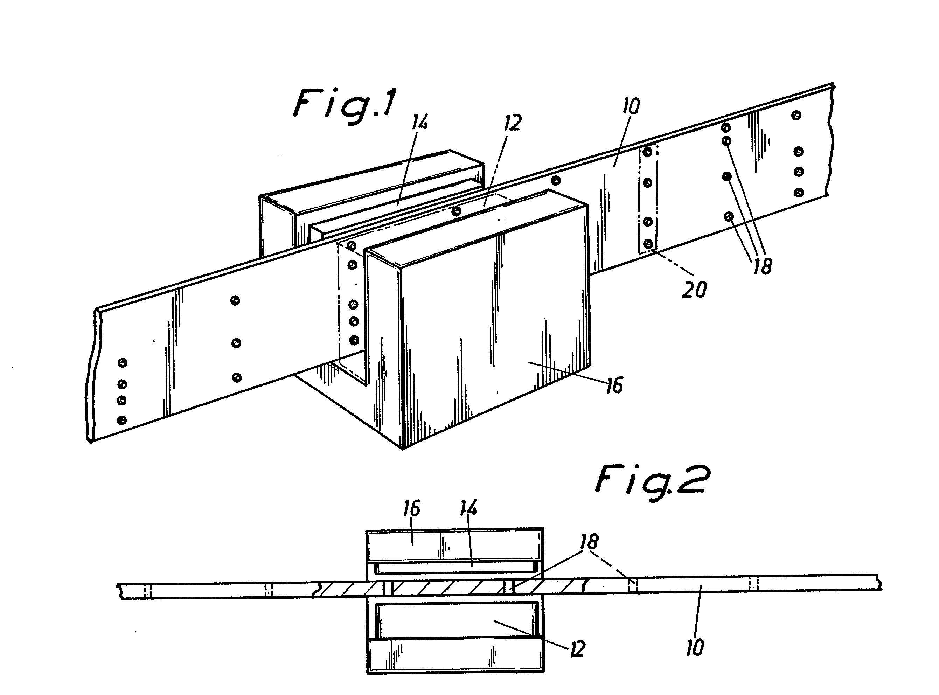

The apparatus in accordance with the invention comprises a signal emitting means 10 in the form of an elongate, comparatively narrow plate or the like which is arranged to be displaced between a detector 12 and a source of light 14 which are placed in opposite relationship in a U-shaped block 16. The signal emitting means 10 has a number of apertures 18 formed therein through which light from the light source 14 may pass to form the signals. The signal-forming apertures 18 are arranged in groups 20 in such a manner that each vertical group of apertures (as in fig. 1) is given a characteristic appearance. In this manner individually coded signals are formed by means of the signal emitting means 10.

As appears from Figs. 1 and 2 the spacing between the signal-forming groups of apertures 18 is somewhat smaller than the width extension of the detector 12 (and the source of light or beams 14). In this manner the detector 12 is at all times detecting at least one signal. The detector will receive a new signal within its area of detection before it loses contact with the previously sensed signal.

The individually coded signals makes it possible to determine the true position of the signal emitting means. Because of the continuous sensing activity of the detector involving at least one signal the detector allows the relative positions of the signal emitting means 10 and the detector 12 to be exactly determined.

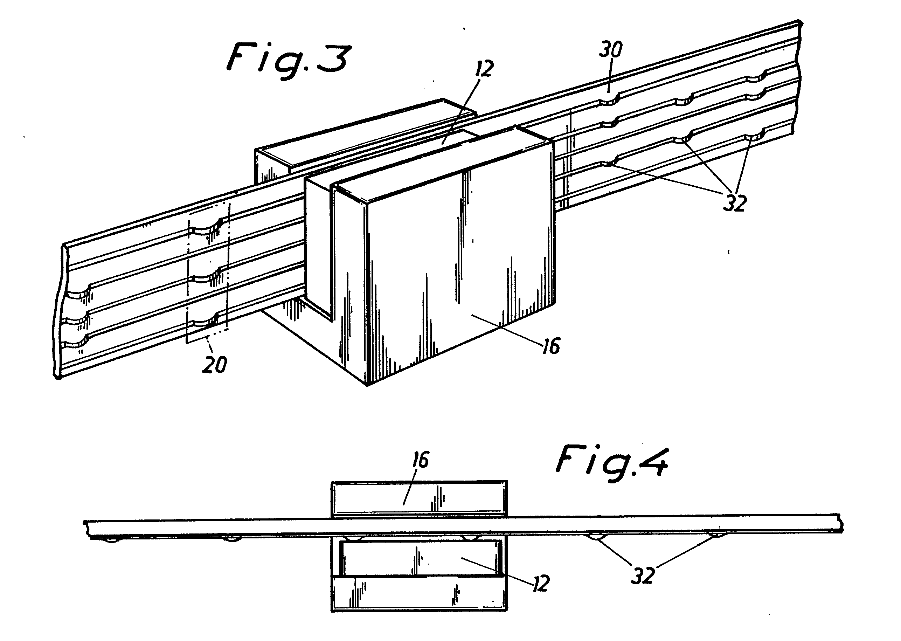

Fig. 3 shows a modification of the invention. In accordance with this embodiment the signal emitting means 30 is provided with a number of sliding contacts 32 (corresponding to and serving the same purpose as the apertures 18) by means of which the various signals are formed. The sliding contacts 32 are connected to a source of current and the detector is a potentiometer.

A large number of other embodiments of the invention are possible within the scope of the appended claims. The signal emitter means may be a source of light or a light modulating means. It may comprise sliding contacts or other electric contacts. It is also possible to use other types of beam emitting means which may be arranged to generate e.g. X-rays or other electromagnetic radiation. The signal emitting means could be one of the plates of a condenser. The signal emitting means could also be a sound generator.

The detector is chosen according to the nature of the signal emitting means and thus is a position-responsive optical sensing means when the signal emitting means is a source of light or a light modulator. In order to sense generators which emit electric signals, position-responsive potentiometers preferably are used. Accordingly, electromagnetic radiation is sensed by a position-responsive radiation detecting means. When the signal emitting means is in the form of a condenser plate the detector forms the second plate. When the signal emitting means is a sound generator the detector is a position-responsive acoustic detector.

One example of a position-responsive photodetector is the detector disclosed in the Swedish Patent 388 684 which is included herein for reference.

In Figs. 1 and 2 is shown one example of coded signals, wherein the various signals are formed by light spots which are arranged in a predetermined pattern. The coding of the signals may be performed in a number of different ways. Each signal could consist of one single partial signal which is placed in a particular position along an axis other than the axis of movement of the relative movements of the signal emitting means and the detector. The detector is a two-axis position-responsive detector. In this case, the coding information is in the axis which differs from the axis of movement.

It is likewise possible to code the signals by time or frequency multiplex modulation.

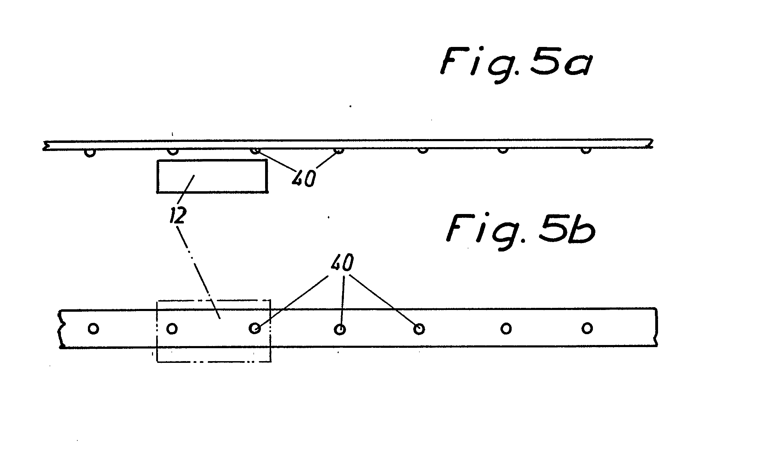

Figs. 5a and 5b show schematically one example of the manner of operation of a time or frequency multiplexed apparatus in accordance with the invention. In this embodiment the various signals are formed by each light spot 40 being given its individual frequency, allowing each light spot signal to be filtered from the signal received by the detector. In a similar manner, the light spots may be turned on and off in sequence and by predetermination of the sequence it becomes possible to distinguish the various spots of light.

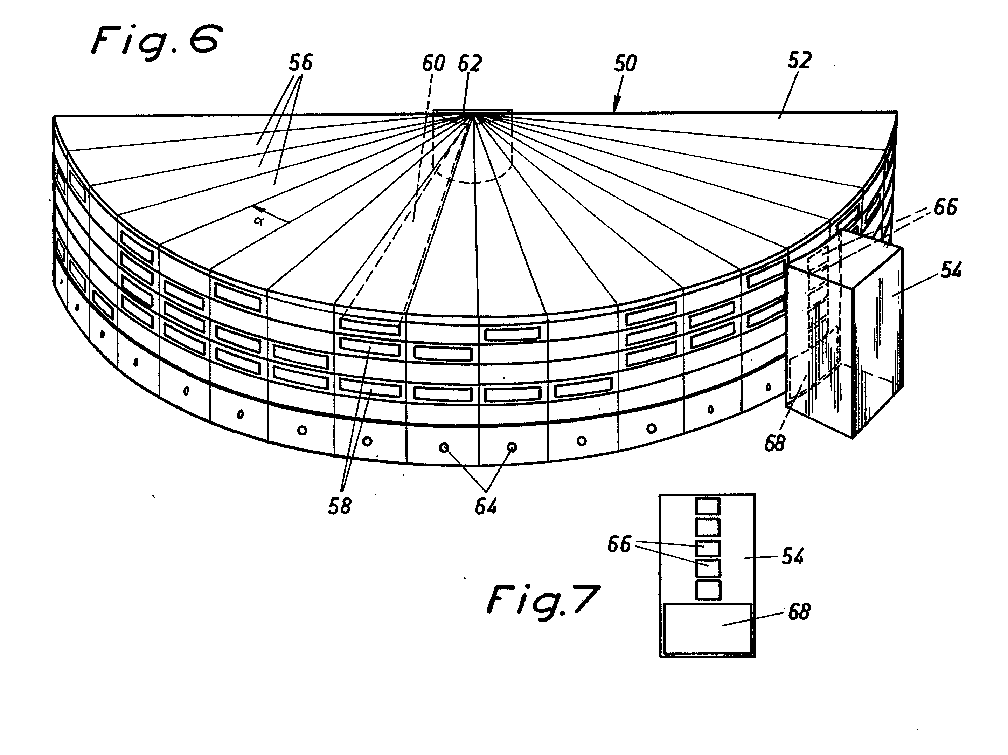

Fig. 6 illustrates an apparatus 50 in accordance with the invention devised to determine the angular position of the signal emitting means 52 incorporated in the apparatus. The apparatus 50 comprises a detector 54. The signal emitting means 52 is in the form of a circular disc which is sub-divided into a number of sectors 56, each one of which represents a predetermined angle $\alpha$. Each sector 56 of the signal emitting means 52 is arranged to emit an individual light signal. The signal consists of a coded signal part and a precision part to allow exact position determination. The coded signal part is formed by a number of comparatively wide openings 58 which may be arranged in the manner illustrated in Fig. 6 for binary coding of the light signal. The openings 58 are connected to a source of light 62 through channels 60. The part of the signal which is formed with the aid of the openings 58 serves to allow identification of the associated sector 56 and there is no particular requirement of precision with regard to this signal except its restriction to the associated sector. Each sector 56 is arranged to emit a precision signal part, which is effected with the aid of an opening 64 which has a very definite position within its associated sector 56.

The detector 54 preferably is somewhat curved along its inner face for adaption of its configuration to the curvature of the signal emitting means 52. The detector 54 comprises sensing means in the form of photoelectric cells 66 which are devised to detect the coded signal part emitted from the openings 58. The readings of the photoelectric cells 66 are used to identify the sector 56 positioned opposite the dectector 54. The detector 54 also comprises a position responsive detector means 68, which may be of the type described in the Swedish Patent 388 684 incorporated herein for reference. This detector 68 senses the signals emitted from the openings 64 and allows the positions of each one of these signals to be determined with considerable precision.

The coded signal part (from the openings 58) of the signal emitted from the signal emitting means 52 is sensed by the photodetectors 66 as mentioned previously. The identification of this signal part allows determination of the position of the signal emitting means 52 within an interval of a size corresponding to the angle $\alpha$. The precision signal part from the openings 64 which is read by the position-responsive detector 68 allows exact determination of the position of the signal emitting means 52 within the interval of the sector. Because of the formation of a signal which is individually coded for each sector 56 true angle position determination may be performed in a quick and easy manner. There is no need to measure on the basis of a reference angle.

By dividing the signal into one signal part for identification of the various sectors 56 and one signal part for precision determination of the position of the signal emitting means 52 it becomes possible to use simple and inexpensive photoelectric cells 64 in the detector 54. The requirement of manufacturing precision as regards the openings 58 and the channels 60 are not either as stricts as in the case of the openings 64 and its channels - (not shown), which means that the manufacture of the signal emitting means 52 becomes more simple than if all openings in the signal emitting means 52 would have been of the same type as openings 64.

The signal sensed by the detector 64 is analysed by a suitable computer unit (not shown).

It is possible to use a stationary detector 54 and a signal emitting means 52 which is movable relative to the detector and vice versa. The best alternative will depend in each individual case on the particular application of the apparatus in accordance with the invention.

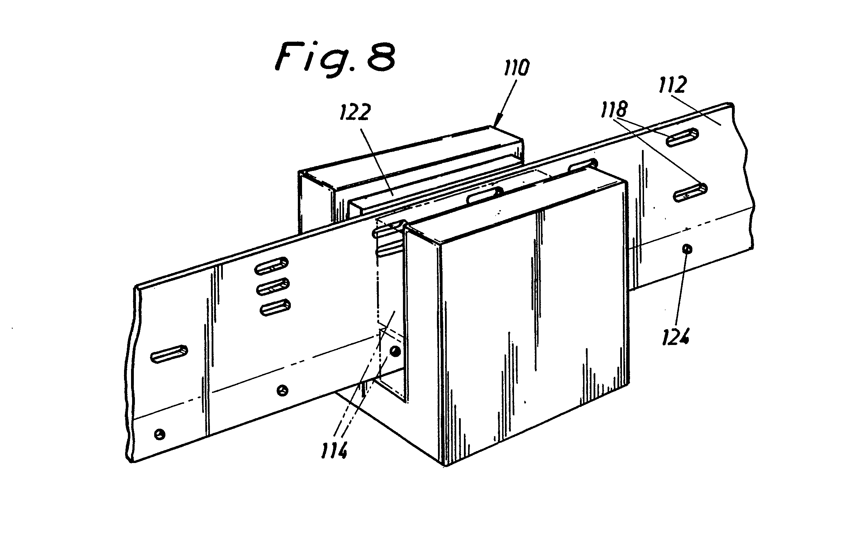

Fig. 8 illustrates an apparatus in accordance with yet another embodiment of the invention. The apparatus 110 is used to perform position determination operations by means of a signal emitting means 112 in the manner which in principle agrees with the function of the apparatus 50 described above. The signals formed by the signal emitting means 112 are sensed by means of a detector 114 and consist of one binary coded signal part which is formed by the openings 118 made in the signal emitting means 112 and one signal part which likewise is formed by means of openings 124 made in the signal emitting means 112 and by means of which the true position of the signal emitting means 112 may be accurately determined. The apparatus 110 comprises a source of light 122. The detector 114 comprises a number of photoelectric cells and a position-responsive detector (not shown) and the composite signal sensed by these means is analysed to provide readings of the true position of the signal emitting means 112.

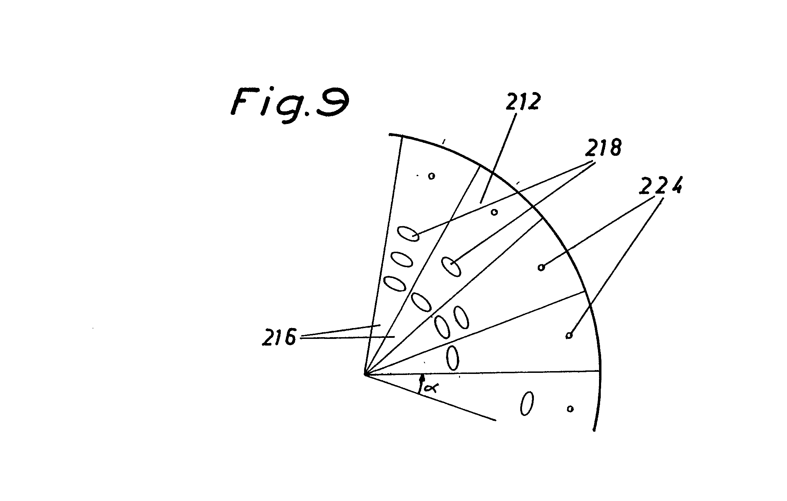

Fig. 9 illustrates yet another possible embodiment of a signal emitting means 212 incorporated in an apparatus designed to determine angular positions. The signal emitting means 212 consists of a disc in which apertures 218 och 224 are made to form the coded part of the signal and the precision determination part of the signal, respectively. The signal emitting means 212 may be arranged for incorporation in an apparatus comprising a source of light and a detector (not shown), which are arranged and constructed in the manner corresponding to the source of light 122 and the detector 114 in accordance with Fig. 8. The detector and the source of light preferably are somewhat curved for adaptation to the configuration of the signal emitting means 212.

The embodiments of the invention described in the aforegoing are to be regarded as examples only and a number of variations and modifications are possible within the scope of the appended claims. The signals may be coded in a different way than by means of the binary system suggested herein.

**Claims**

1. An apparatus for determining the positions of two reference objects which are movable relative to each other along a predetermined track, one of said objects being provided with at least one signal emitting means (10, 30, 52, 112, 212) and the other reference object being provided with a detector - (12, 54, 114) for detection of signals emitted from the signal emitting means, **characterized** therein that the detector (12, 54, 114) is arranged to sense the geometrical positions of signals emitted from the signal emitting means (10, 30, 52) and in that the signal emitting means is arranged to emit more than one signal and to code said signals to allow identification of the individual signals, and in that the position determining apparatus is devised in such a manner that throughout the entire position determining operation at least one signal is present on the sensing surface of the detector (12, 54, 114).

2. An apparatus as claimed in claim 1, **characterized** therein that the signal emitting means is constructed to code the signals by imparting a predetermined frequency to each signal.

3. An apparatus as claimed in claim 2 or 3, **characterized** therein that the signal emitting means is constructed to code the signals by emitting said signals in a predetermined time sequence.

4. An apparatus as claimed in any one of claims 1 - 3, **characterized** therein that each signal has a specific position along an axis which differs from the axis of movement of the relative movement of the reference object.

5. An apparatus according to any one of claims 1 - 4, **characterized** therein that each signal comprises a number of part signals the composition of which is the code of the individual signal.

6. An apparatus as claimed in claim 1, **characterized** therein that the apparatus comprises a signal emitting means (52, 112, 212) which is designed to emit a composite signal comprising a coded signal part for coarse position determination and a precision signal part for exact position determination, and at least one detector (54, 114) which is designed to sense the composite signal emitted from the signal emitting means (52, 112, 212), said detector (54, 114) comprising at least one means - (66) for sensing the coded signal part and at least one position responsive detector means (68) which is arranged to sense the geometrical position of the precision signal part.

7. An apparatus as claimed in claim 6, **characterized** therein that the signal emitting means (52, 212, 112) is divided into a number of sectors (56, 216) and in that each one of said sectors (56, 216) is arranged to emit an individually coded signal.

8. An apparatus as claimed in claim 6 or 7, **characterized** therein that the signal emitting means - (52, 112, 212) is formed with a number of apertures (58, 64, 118, 124, 218, 224) through which light may pass, that a source of light (62, 122) is arranged to illuminate the signal emitting means (52, 112, 212) and that the detector (54, 114) comprises light-sensitive detector means (66, 68).

9. An apparatus as claimed in any one of the preceding claims, **characterized** therein that it is designed to determine angular positions, that the signal emitting means (52, 212) is curved and that the detector (54) has a correspondingly curved configuration.

*Fig.1*

14  12  10

18

20

16

*Fig.2*

16  14

18

12  10

Fig.3

Fig.4

0 203 897

Fig. 5a

Fig. 5b

40

12

40

0 203 897

Fig.6

Fig.7

0 203 897

Fig. 8

0 203 897

Fig.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | <u>DD - A - 62 161</u> (POPPE)<br>* Totality * | 1-7 | G 01 B 21/02<br>G 01 D 5/34 |
| X | <u>CH - A5 - 647 862</u> (ZEISS)<br>* Totality * | 1-8 | |
| X | <u>CH - A - 422 361</u> (LICENTIA)<br>* Totality * | 1-8 | |
| X | <u>DE - B - 1 623 663</u> (COMMISSARIAT)<br>* Totality * | 1-9 | |
| X | <u>AT - B - 288 050</u> (LEITZ)<br>* Totality * | 1-9 | |
| X | <u>DE - A1 - 3 127 116</u> (KUHNKE)<br>* Totality * | 1 | **TECHNICAL FIELDS SEARCHED (Int. Cl.4)**<br><br>G 01 B 7/00<br>G 01 B 11/00<br>G 01 B 21/00<br>G 01 D 5/00 |

The present search report has been drawn up for all claims

| Place of search | Date of completion of the search | Examiner |
|---|---|---|
| VIENNA | 13-08-1986 | TOMASELLI |